# EUROPÄISCHE PATENTSCHRIFT

(11) **EP 1 776 617 B1**
(45) Veröffentlichungstag und Bekanntmachung des Hinweises auf die Patenterteilung: **12.12.2007**
(21) Anmeldenummer: 05754692.1
(22) Anmeldetag: 17.06.2005
(51) Int. Cl.: G05B 9/03, G05B 19/4063

(54) **VERFAHREN ZUR SICHEREN POSITIONSÜBERWACHUNG**
METHOD FOR RELIABLE POSITION MONITORING
PROCEDE DE SURVEILLANCE DE POSITION FIABLE

(30) Priorität: 06.08.2004 DE 102004038275
(43) Veröffentlichungstag der Anmeldung: 25.04.2007
(73) Patentinhaber: Dr. Johannes Heidenhain GmbH, 83292 Traunreut (DE)
(72) Erfinder: BALLEISEN, Andreas, 84529 Tittmoning (DE)
(86) Internationale Anmeldenummer: PCT/EP2005/006502
(87) Internationale Veröffentlichungsnummer: WO 2006/015651

(56) Entgegenhaltungen:
- EP-A- 0 658 832
- WO-A-03/003131
- US-A- 4 484 137
- US-A- 5 201 380
- US-A1- 2004 107 026

## Beschreibung

Die Erfindung betrifft ein Verfahren zur sicheren Positionsüberwachung. Solche Verfahren sind zum Beispiel im Zusammenhang mit numerisch gesteuerten Werkzeugmaschinen von Bedeutung.

Im Bereich der numerisch gesteuerten Werkzeugmaschinen, aber auch allgemeiner im Bereich der Automatisierungstechnik spielt das Thema Sicherheit eine zunehmend wichtige Rolle. Durch den immer weiter fortschreitenden Ersatz von rein mechanischen Sicherungsmitteln wie z.B. Endlagenschaltern durch programmüberwachte Sicherheitskonzepte steigen die Anforderungen an die Sicherheit der Positionserfassung und Überwachung. So wird gefordert, dass ein einzelner Fehler (Sensorausfall, Kabelbruch, etc.) zumindest nicht zu einer fehlerhaften Positionserfassung führen darf, die nicht als solche erkannt wird. Wird nämlich eine fehlerhafte Positionserfassung erkannt, so kann zumindest über eine entsprechende Reaktion ein sicherer Zustand erhalten werden, z.B. über einen Nothalt.

Um dies zu erreichen, ist eine zweikanalige Erfassung der Positionswerte mit unterschiedlichen Positionsmessgeräten üblich, wobei die erfassten Positionswerte miteinander verglichen werden. Auch dieser Vergleich wird dabei zweikanalig, durchgeführt. Dies wird erreicht, indem zwei Prozessoren ihre jeweils von einem Positionsmessgerät erhaltenen Positionswerte miteinander austauschen und vergleichen. Erkennt auch nur einer der beiden Prozessoren eine Abweichung, wird ein sicherer Zustand hergestellt, etwa indem an einer Werkzeugmaschine ein Stillstand aller Achsen erzwungen wird.

Eine vollständige Zweikanaligkeit ist jedoch relativ aufwändig. Es wurde daher in der DE 10200436 A1 eine Vorrichtung beschrieben, mit der anhand der Ausgangssignale eines einzigen Positionsmessgerätes eine sichere Positionsüberwachung realisiert werden kann. Die Vorrichtung macht sich zu nutze, dass in einem Positionsmessgerät unterschiedliche den Positionswert wiedergebende Signale gebildet werden können, die auf ihre Konsistenz hin überprüfbar sind und die den Anforderungen an eine sichere Positionserfassung genügen. So kann durch Überwachung der Amplitude von periodischen Ausgangssignalen sichergestellt werden, dass der jeweils erfasste Positionswert korrekt ist, bzw. es können fehlerhafte Signale als solche erkannt und geeignete Maßnahmen eingeleitet werden. Auf unterschiedliche Weise aus den Signalen des Positionsmessgerätes gebildete Daten liefern unabhängig voneinander abgeleitete Positionswerte, die dann wieder zweikanalig miteinander verglichen werden können.

In numerisch gesteuerten Werkzeugmaschinen ist es auch bekannt, im Zuge der Regelung der Achsen der Werkzeugmaschine eine Schleppfehlerüberwachung durchzuführen. Dabei wird die Sollwertvorgabe (z.B. Position oder Geschwindigkeit einer Achse) mit dem aktuellen Istwert verglichen. Bei einer zu großen Abweichung wird die Bearbeitung des Werkstückes unterbrochen oder zumindest ein Alarm ausgegeben, da dann nicht mehr sichergestellt ist, dass das bearbeitete Werkstück den Vorgaben entspricht. Zur sicheren Überwachung einer numerisch gesteuerten Werkzeugmaschine eignet sich eine solche Schleppfehlerüberwachung jedoch nicht.

Das US- Patent US-A-4,484,137 zeigt die Merkmale des Oberbegriffs des Anspruchs 1.

Aufgabe der Erfindung ist es, ein verbessertes Verfahren zur sicheren Positionsüberwachung anzugeben.

Diese Aufgabe wird gelöst durch ein Verfahren nach Anspruch 1. Vorteilhafte Details des Verfahrens ergeben sich aus den von Anspruch 1 abhängigen Ansprüchen.

Für das vorgeschlagene Verfahren zur sicheren Positionsüberwachung benötigt man wenigstens ein Positionsmessgerät, sowie eine Numerische Steuerung mit einer ersten Recheneinheit, einer zweiten Recheneinheit und einem Sollwertgenerator. Das Positionsmessgerät überträgt wenigstens einen Positionsmesswert an die erste Recheneinheit. Der Sollwertgenerator überträgt einen Sollwert an die zweite Recheneinheit. Der wenigstens eine Positionsmesswert wird auch an die zweite Recheneinheit übertragen. Der Sollwert wird auch an die erste Recheneinheit übertragen, und in der ersten und zweiten Recheneinheit werden voneinander unabhängige Vergleiche vom Sollwert mit dem wenigstens einen Positionsmesswert vorgenommen.

Auf diese Art und Weise ist es möglich, einen zweikanaligen Vergleich zwischen Soll- und Istwert durchzuführen. Bei einer zu großen Abweichung zwischen beiden Werten kann ein sicherer Zustand hergestellt werden.

Insbesondere ist es möglich, mit nur einem einzigen, einfachen Positionsmessgerät eine sicherere Positionsüberwachung durchzuführen. Hierzu muss im Stillstand eine Absicherung gegen einen Wellenbruch eingeführt werden.

Ein mechanischer Wellenbruch liegt vor, wenn die mechanische Verbindung zwischen einem zu überwachenden Objekt und dem überwachenden Positionsmeßsystem abbricht. Das Objekt bewegt sich, die Bewegung wird aber nicht mehr auf das Positionsmeßsystem übertragen. Die Steuerung registriert also keine Bewegung mehr.

Ein elektronischer Wellenbruch bewirkt, dass der an die Steuerung übertragene Positionsmesswert einfriert. Dies kann je nach Positionsmeßsystem und Folgeelektronik unterschiedlichste Ursachen haben, führt aber dazu, dass die Steuerung veraltete Positionswerte erhält und eine Bewegung des überwachten Objektes nicht mehr erkennt.

Die Steuerung kann ohne entsprechende Maßnahmen weder einen mechanischen noch einen elektronischen Wellenbruch von einem tatsächlichen Stillstand des überwachten Objektes unterscheiden.

Weitere Vorteile sowie Einzelheiten der vorliegenden Erfindung ergeben sich aus der nachfolgenden Beschreibung verschiedener Ausführungsformen anhand der Figuren. Es wird der Sollwert gemäß
- Figur 1: jeweils zweikanalig mit einem einzigen Positionswert, gemäß
- Figur 2: mit zwei von einem Positionsmessgerät abgeleiteten Positionswerten, und gemäß
- Figur 3: mit zwei unabhängig voneinander mit zwei Positionsmessgeräten erfassten Positionswerten verglichen.

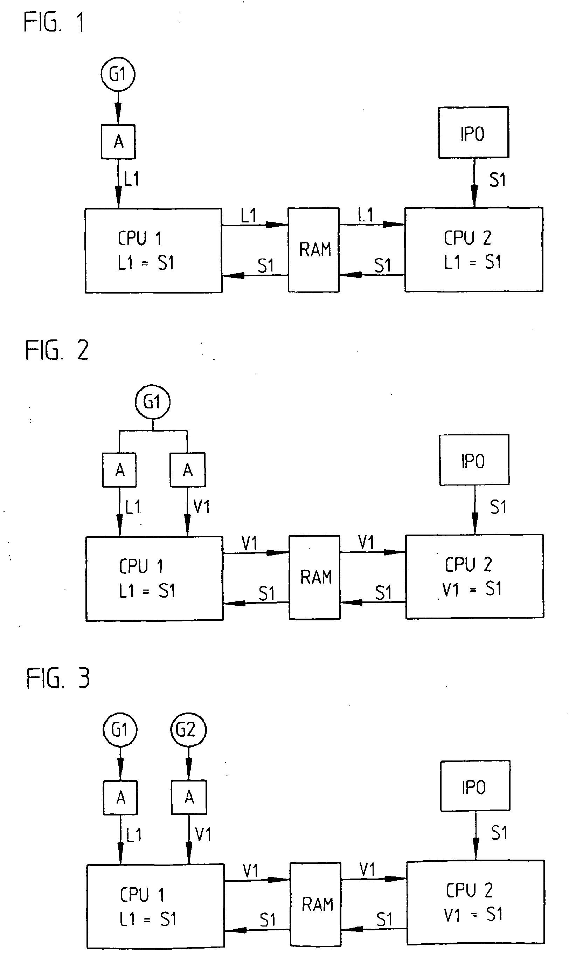

Nach einer in Figur 1 dargestellten ersten Variante des Verfahrens zur sicheren Positionsüberwachung werden die Signale des einzigen Positionsmessgerätes G1 in einer Auswerteschaltung A zu einem Positionswert L1 verarbeitet und an eine erste Recheneinheit CPU1 geleitet. Diese erste Recheneinheit CPU1 ist Teil einer Numerischen Steuerung.

Ein Sollwertgenerator IPO überträgt gleichzeitig einen Sollwert S1 an eine zweite Recheneinheit CPU2, die ebenfalls Teil der Numerischen Steuerung ist. Der Sollwertgenerator IPO kann z.B. der Interpolator der Numerischen Steuerung sein, der als Software auf der zweiten Recheneinheit CPU2 läuft. Die erste und zweite Recheneinheit CPU1, CPU2 tauschen nun den Positionswert L1 und den Sollwert S1 aus. Dies kann beispielsweise über einen gemeinsam genutzten Speicher RAM geschehen.

Nun ist sowohl in der ersten Recheneinheit CPU1 als auch in der zweiten Recheneinheit CPU2 ein zweikanaliger Vergleich von Sollwert S1 und Istwert, also Positionswert L1 möglich. Erkennt auch nur eine der beiden Recheneinheiten CPU1, CPU2 eine nicht tolerierbare Abweichung, wird ein Alarm abgegeben, der zu einer entsprechenden Reaktion führt. Dies kann beispielsweise das Stillsetzen der Werkzeugmaschine über einen Abschaltkanal sein. Dieser Abschaltkanal sollte redundant, also separat für jede Recheneinheit CPU1, CPU2 zur Verfügung stehen.

In einer Abwandlung der ersten Variante gemäß Figur 1 könnte das Positionsmessgerät G1 und / oder der Interpolator IPO den jeweiligen Vergleichswert L1 bzw. S1 auch an beide Recheneinheiten CPU1, CPU2 senden. Ein Austausch der beiden Werte wäre dann unnötig. Es entsteht so aber evtl. ein höherer Aufwand durch zusätzlich benötigte Leitungen.

In Figur 2 ist eine zweite Variante des Verfahrens zur sicheren Positionsüberwachung dargestellt. Aus unterschiedlichen, voneinander unabhängigen Signalen des einzigen Positionsmessgerätes G1 werden zwei Positionswerte L1, V1 erzeugt. Dies kann in zwei Auswerteschaltungen A unabhängig voneinander oder auch in einer einzigen Auswerteschaltung A (nicht dargestellt) so erfolgen, dass die beiden Positionswerte L1, V1 eine gewisse Unabhängigkeit voneinander aufweisen. Für ein Positionsmessgerät G1, das sowohl digitale als auch analoge positionsabhängige Signale ausgibt, kann dies durch die Verarbeitung der digitalen Ausgangssignale zur Bildung des ersten Positionswertes L1, und die Verarbeitung der analogen Ausgangssignale zur Bildung des zweiten Positionswertes V1 geschehen.

Die beiden Positionswerte L1, V1 werden an die erste Recheneinheit CPU1 geleitet. Einer der beiden Positionswerte, im Beispiel der Positionswert V1, wird an die zweite Recheneinheit CPU2 übertragen, während der Sollwert S1 von der zweiten Recheneinheit CPU2 zur ersten Recheneinheit CPU1 übertragen wird. Wieder sind ein zweikanaliger Vergleich (hier L1 mit S1 und V1 mit S1) und eine entsprechende Reaktion auf Abweichungen möglich.

Natürlich ist es in Abwandlung dieses zweiten Verfahrens auch möglich, den zweiten Positionswert V1 direkt an die zweite Recheneinheit CPU2 und/oder den Sollwert S1 direkt an beide Recheneinheiten CPU1, CPU2 zu übertragen. Wegen des höheren Verkabelungsaufwandes ist die in Figur 2 dargstellte Variante aber bevorzugt.

Eine dritte Variante des Verfahrens ist in Figur 3 dargestellt. Zwei Positionsmessgeräte G1, G2 erzeugen zwei völlig voneinander unabhängige Positionswerte L1, V1. Mit diesen beiden Positionswerten wird ansonsten genauso verfahren wie im Beispiel gemäß Figur 2 beschrieben.

Um die Sicherheit weiter zu erhöhen, kann bei der Übertragung der verschiedenen Daten L1, V1, S1 noch der Einsatz von Kontrollwerten wie z.B. CRC-Codes zur Sicherstellung der korrekten Datenübertragung, oder einer Herkunftsangabe der jeweiligen Daten (Adresse des Positionsmessgerätes oder der Auswerteschaltung A, von der die Positionswerte stammen) sinnvoll sein. So ist jederzeit überprüfbar, ob alle Werte korrekt übertragen wurden und von den richtigen Quellen stammen.

Zusätzlich sollte der Abschaltkanal jeder Recheneinheit CPU1, CPU2 so abgesichert werden, dass er auch nach einer gewissen Zeit der Inaktivität der jeweiligen Recheneinheit CPU1, CPU2 aktiviert wird. Dies kann durch je eine Watchdog - Schaltung für jede Recheneinheit CPU1, CPU2 realisiert werden.

Um auszuschließen, dass ein elektronischer Wellenbruch im Stillstand nicht erkannt wird (da ja dann weder im Sollwert S1 noch im Positionsmesswert L1, V1 Änderungen auftreten), sollte der elektronische Wellenbruch zumindest im Stillstand separat überwacht werden. Bei Bewegung (also variablem Sollwert) würde ein elektronischer (ebenso wie ein mechanischer) Wellenbruch sofort erkannt, da Soll- und Ist-Position nicht mehr übereinstimmen würden.

Im Falle digital an die Steuerung übermittelter Positionswerte wird zur Überwachung auf elektronischen Wellenbruch vorgesehen, dass das Positionsmeßsystem abwechselnd mit dem eigentlichen Positionswert einen zweiten, unterschiedlichen Positionswert überträgt. Erster und zweiter Positionswert stehen dabei in einer definierten Beziehung zueinander, beispielsweise kann der zweite einen gewissen Offset zum ersten Positionswert aufweisen. Bleibt die abwechselnde Übertragung aus, oder wird immer der gleiche Wert übertragen, so kann die Steuerung auf einen elektronischen Wellenbruch schließen. Die beiden zur Überwachung auf elektronischen Wellenbruch übertragenen Positionswerte können dabei auch als unabhängige Positionswerte L1, V1 für den zweikanaligen Vergleich mit dem Sollwert S1 gemäß der oben beschriebenen zweiten Variante des erfindungsgemäßen Verfahrens verwendet werden.

Der Begriff Numerische Steuerung soll hier insbesondere solche Steuerungen für Werkzeugmaschinen umfassen. Er soll aber auch jede Art von automatisierter Ablaufsteuerung umfassen, die über zwei unabhängige Recheneinheiten CPU1, CPU2 verfügt und damit zur Durchführung eines der beschriebenen Verfahren geeignet ist.

Die Sicherheit einer Positionsüberwachung wird selbst dann erhöht, wenn ein Positionswert L1 nur mit einem einzigen Positionsmessgerät G1 erfasst wird. Durch den zweikanaligen Vergleich mit einem Erwartungswert bzw. Sollwert S1 kann selbst in diesem Fall eine zusätzliche Sicherheitskomponente eingeführt werden.

Werden mehr als eine Achse positionsüberwacht, so wird für jede der Achsen getrennt eines der beschriebenen Verfahren durchgeführt. Es muss also für jede Achse wenigstens ein Positionsmessgerät und damit wenigstens ein Positionswert und ein Sollwert vorliegen.

## Patentansprüche

1. Verfahren zur sicheren Positionsüberwachung, wobei für das Verfahren eine Numerischen Steuerung mit einer ersten Recheneinheit (CPU1), einer zweiten Recheneinheit (CPU2) und einem Sollwertgenerator (IPO), sowie ein Positionsmessgerät (G1) verwendet werden, und wobei
• das Positionsmessgerät (G1) zwei Positionsmesswerte (L1, V1) an die erste Recheneinheit (CPU1) überträgt,
• der Sollwertgenerator (IPO) einen Sollwert (S1) an die zweite Recheneinheit (CPU2) überträgt,
• einer der Positionsmesswerte (L1, V1) auch an die zweite Recheneinheit (CPU2) übertragen wird,
• der Sollwert (S1) auch an die erste Recheneinheit (CPU1) übertragen wird,
• in der ersten und zweiten Recheneinheit (CPU1, CPU2) voneinander unabhängige Vergleiche zwischen dem Sollwert (S1) und den Positionsmesswerten (L1, V1) vorgenommen werden,
**dadurch gekennneichnet, dass**
• die Positionsmesswerte (L1, V1) steuerungsseitig auf einen elektronischen Wellenbruch zwischen dem Positionsmessgerät (G1) und der ersten Recheneinheit (CPU1) überwacht werden, indem überprüft wird, ob die Positionswerte (L1, V1) unterschiedlich sind, eine definierte Beziehung zueinander aufweisen und indem die Positionsmesswerte abwechselnd an die erste Recheneinheit (CPU1) übertragen werden.

2. Verfahren nach Anspruch 1, **dadurch gekennzeichnet, dass** der Sollwert (S1) von der zweiten Recheneinheit (CPU2) zur ersten Recheneinheit (CPU1) und einer der Positionsmesswerte (L1, V1) von der ersten Recheneinheit (CPU1) zur zweiten Recheneinheit (CPU2) übertragen wird.

3. Verfahren nach Anspruch 2, **dadurch gekennzeichnet, dass** einer der Positionsmesswerte (L1, V1) und der Sollwert (S1) zwischen der ersten und zweiten Recheneinheit (CPU1, CPU2) über einen gemeinsamen Speicherbereich (RAM) ausgetauscht werden.

## Claims

1. Method for reliable position monitoring, a numerical control, with a first computing unit (CPU1), a second computing unit (CPU2) and a reference value generator (IPO) and also a position measuring device (G1) being used for the method and
• the position measuring device (G1) transmitting two position measuring values (L1, V1) to the first computing unit (CPU1),
• the reference value generator (IPO) transmitting a reference value (S1) to the second computing unit (CPU2),
• one of the position measuring values (L1, V1) being transmitted also to the second computing unit (CPU2),
• the reference value (S1) being transmitted also to the first computing unit (CPU 1),
• in the first and second computing unit (CPU1, CPU2), comparisons, which are independent of each other, between the reference value (S1) and the position measuring values (L1, V1) being undertaken,
**characterised in that**
• the position measuring values (L1, V1) are monitored on the control side for an electronic shaft breakage between the position measuring device (G1) and the first computing unit (CPU1), **in that** it is checked whether the position values (L1, V1) are different, have a defined relationship to each other and **in that** the position measuring values are transmitted to the first computing unit (CPU1) alternately.

2. Method according to claim 1, **characterised in that** the reference value (S1) is transmitted from the second computing unit (CPU2) to the first computing unit (CPU1) and one of the position measuring values (L1, V1) from the first computing unit (CPU1) to the second computing unit (CPU2).

3. Method according to claim 2, **characterised in that** one of the position measuring values (L1, V1) and the reference value (S1) are exchanged between the first and second computing unit (CPU1, CPU2) via a common memory region (RAM).

## Revendications

1. Procédé de surveillance de position fiable, selon lequel une commande numérique, comprenant une première unité de calcul (CPU1), une deuxième unité de calcul (CPU2) et un générateur de valeurs de consigne (IPO), ainsi qu'un appareil de mesure de position (G1) sont utilisés pour le procédé, et selon lequel
- l'appareil de mesure de position (G1) transmet deux valeurs mesurées de position (L1, V1) à la première unité de calcul (CPU1),
- le générateur de valeurs de consigne (IPO) transmet une valeur de consigne (S1) à la deuxième unité de calcul (CPU2),
- l'une des valeurs mesurées de position (L1, V1) est également transmise à la deuxième unité de calcul (CPU2),
- la valeur de consigne (S1) est également transmise à la première unité de calcul (CPU1),
- des comparaisons entre la valeur de consigne (S1) et les valeurs mesurées de position (L1, V1) sont effectuées indépendamment les unes des autres, dans les première et deuxième unités de calcul (CPU1, CPU2),
**caractérisé par le fait que**
- les valeurs mesurées de position (L1, V1) sont surveillées côté commande pour détecter une rupture d'onde électronique entre l'appareil de mesure de position (G1) et la première unité de calcul (CPU1), en vérifiant si les valeurs de position (L1, V1) sont différentes et présentent une relation définie entre elles, et en transmettant les valeurs mesurées de position en alternance à la première unité de calcul (CPU1).

2. Procédé selon la revendication 1, **caractérisé par le fait que** la valeur de consigne (S1) est transmise de la deuxième unité de calcul (CPU2) à la première unité de calcul (CPU1), et l'une des valeurs mesurées de position (L1, V1) est transmise de la première unité de calcul (CPU1) à la deuxième unité de calcul (CPU2).

3. Procédé selon la revendication 2, **caractérisé par le fait que** l'une des valeurs mesurées de position (L1, V2) et la valeur de consigne (S1) sont échangées entre la première et la deuxième unité de calcul (CPU1, CPU2), par l'intermédiaire d'une zone de mémoire (RAM) commune.
